# EUROPÄISCHE PATENTSCHRIFT

(11) **EP 2 440 747 B1**
(45) Veröffentlichungstag und Bekanntmachung des Hinweises auf die Patenterteilung: **11.12.2013**
(21) Anmeldenummer: 10724450.1
(22) Anmeldetag: 02.06.2010
(51) Int. Cl.: F01D 11/04, F02C 7/28, F16J 15/34

(54) **TURBOMASCHINE**
Turbomachine
Turbomachine

(30) Priorität: 09.06.2009 EP 09007625
(43) Veröffentlichungstag der Anmeldung: 18.04.2012
(73) Patentinhaber: Siemens Aktiengesellschaft, 80333 München (DE)
(72) Erfinder: GRIESHABER, Dirk, 46485 Wesel (DE)
(86) Internationale Anmeldenummer: PCT/EP2010/057674
(87) Internationale Veröffentlichungsnummer: WO 2010/142584

(56) Entgegenhaltungen:
- DE-A1- 3 612 327
- DE-A1- 3 619 489
- GB-A- 805 980
- GB-A- 2 167 141
- US-A- 1 876 515
- US-A- 3 917 289

## Beschreibung

Die vorliegende Erfindung betrifft eine Turbomaschine, insbesondere Dampfturbine, umfassend ein Maschinengehäuse und eine durch dieses geführte und zumindest einseitig aus diesem herausgeführte Welle, wobei wenigstens ein zwischen der Welle und dem Maschinengehäuse vorhandener Ringspalt über eine Wellendichtungsanordnung abgedichtet ist.

Derartige Turbomaschinen sind im Stand der Technik in unterschiedlichsten Ausgestaltungen bekannt. Im Inneren des Maschinengehäuses herrscht in Abhängigkeit von der Art der Turbomaschine ein Druck, der unterhalb oder oberhalb des Atmosphärendruckes der Turbomaschinenumgebung liegt. Ein grundsätzliches Problem bei Turbomaschinen besteht dahingehend, dass der zwischen der Welle und dem Maschinengehäuse vorhandene Ringspalt aufgrund der Relativbewegung zwischen der Wellenoberfläche und den angrenzenden Maschinengehäuseflächen nicht vollständig abgedichtet werden kann. Dies führt dazu, dass beispielsweise bei Dampfturbinen mit Abdampfdrücken unterhalb des Atmosphärendruckes Umgebungsfluid in das Innere des Maschinengehäuses eindringen kann, was zu einer Beeinträchtigung des Betriebs und des Wirkungsgrades der Dampfturbine führt. Bei Verdichtern oder Gasturbinen, bei denen der Maschinengehäuseinnendruck größer als der Maschinengehäuseumgebungsdruck ist, kann das Prozessfluid hingegen aus dem Inneren des Maschinengehäuses in die Maschinengehäuseumgebung austreten, was sich negativ auf den thermischen Wirkungsgrad der Turbomaschine auswirkt.

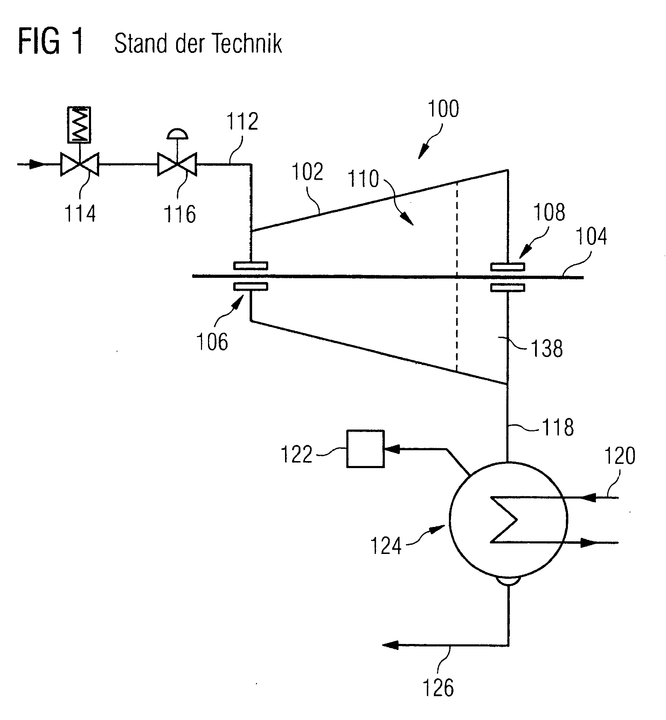

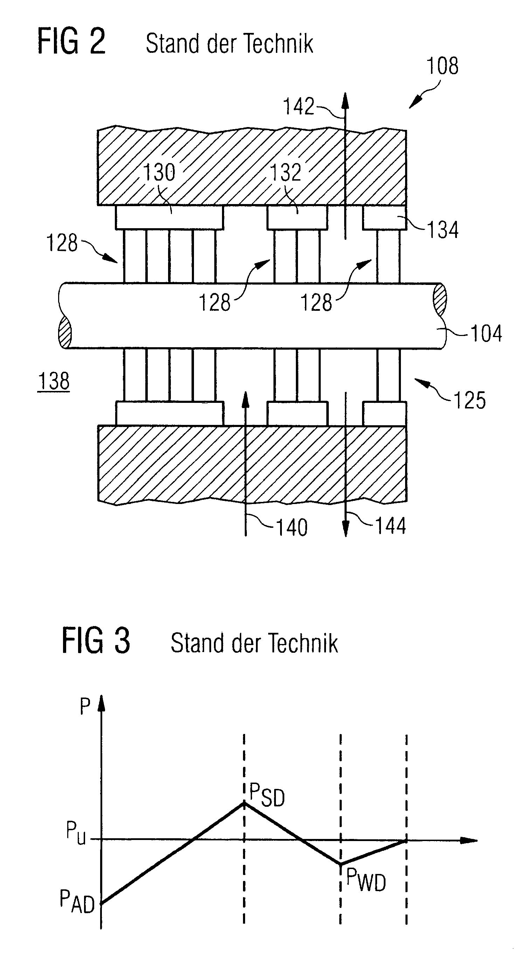

Unter Bezugnahme auf die Figuren 1, 2 und 3 wird nachfolgend eine Turbomaschine in Form einer Dampfturbine mit einer herkömmlichen Wellendichtungsanordnung beschrieben, wobei Figur 1 eine schematische Ansicht der Dampfturbine, Figur 2 eine schematische Ansicht einer hinteren Dichtschale des Maschinengehäuses der in Figur 1 dargestellten Dampfturbine ist, die eine herkömmliche Wellendichtungsanordnung aufweist, und Figur 3 schematisch die in der in Figur 2 dargestellten Wellendichtungsanordnung vorherrschenden Drücke zeigt.

Die Dampfturbine 100 umfasst ein Maschinengehäuse 102, durch das sich eine Welle 104 erstreckt, die beidseitig aus dem Maschinengehäuse 102 herausgeführt ist. Das Maschinengehäuse 102 ist mit einer vorderen Dichtschale 106 und mit einer hinteren Dichtschale 108 versehen, wobei die hintere Dichtschale 108 vorliegend die Aufgabe übernimmt, den innerhalb des Maschinengehäuses 102 definierten Druckraum 110 zur Maschinengehäuseumgebung abzudichten. Dem Druckraum 110 der Dampfturbine 100 wird über eine Zuleitung 112, die in Durchströmungsrichtung aufeinanderfolgend mit einem Schnellschlussventil 114 und einem Regelventil 116 versehen ist, Frischdampf zugeführt. Nach der Entspannung des Dampfes in der Dampfturbine 100 wird der Abdampf über eine Ableitung 118 einer mit einer Kühleinrichtung 120 versehenen und mit einer Evakuierungseinrichtung 122 wirkverbundenen Kondensationsanlage 124 zugeführt und dort kondensiert.

Das entstehende Kondensat wird über eine Leitung 126 aus der Kondensationsanlage 124 geleitet.

Zur Abdichtung des zwischen der Welle 104 und der hinteren Dichtschale 108 vorhandenen Ringspaltes 125 ist die hintere Dichtschale 108, die in das Maschinengehäuse 102 fest und abdichtend eingebaut ist oder mit dem Maschinengehäuse 102 eine konstruktive Einheit bildet, mit einer Wellendichtungsordnung 128 versehen, wie es in Figur 2 dargestellt ist. Die Wellendichtungsanordnung 128 umfasst ausgehend vom Druckraum 110 mindestens drei aufeinanderfolgende Dichtungsmodule, und zwar eine innere Labyrinthdichtung 130, eine mittlere Labyrinthdichtung 132 und ein äußere Labyrinthdichtung 134, die den Ringspalt 125 abdichten.

Während des Betriebs der Dampfturbine 100 befindet sich im hinteren Abdampfbereich 138 des Maschinengehäuses 102 Abdampf unter einem Abdampfdruck p_{AD}. Außerhalb des Maschinengehäuses 102 befindet sich Luft unter einem Umgebungsdruck pᵤ, der oberhalb des Abdampfdruckes P_{AD} liegt. Ausgehend von dem Abdampfbereich 138 wird zwischen der inneren Labyrinthdichtung 130 und der mittleren Labyrinthdichtung 132 ein Sperrdampf unter dem Sperrdampfdruck p_{SD} über eine Sperrdampfzuleitung 140 in den Ringspalt 125 eingeleitet, wobei der Sperrdampfdruck p_{SD} geringfügig oberhalb des Umgebungsdruckes pᵤ liegt. Dabei müssen der Sperrdampfdruck p_{SD} sowie die Temperatur des Sperrdampfes exakt geregelt bzw. eingestellt werden, um Leckagen oder Schäden durch Überhitzung oder Kondensat an der hinteren Dichtschale 108 und an der Welle 104 zu vermeiden. Das Druckgefälle des Sperrdampfes baut sich in Richtung des Abdampfbereiches 138 über die innere Labyrinthdichtung 130 auf das Druckniveau des Abdampfdruckes p_{AD} und in Richtung der Umgebung über die mittlere Labyrinthdichtung 132 auf den zwischen der mittleren Labyrinthdichtung 132 und der äußeren Labyrinthdichtung 134 vorherrschenden Wrasendampfdruck p_{WD} ab, wobei der Wrasendampfdruck p_{WD} bedingt durch den Kaminzug in der Wrasendampfableitung 142 leicht unterhalb des Maschinengehäuseumgebungsdruckes pᵤ liegt. In Abhängigkeit von dem Niveau des über die Sperrdampfzuführleitung 140 zugeführten Sperrdampfdruckes p_{SD} ist es auch denkbar, dass sich der Sperrdampfdruck p_{SD} konstruktiv bedingt nicht vollständig über die mittlere Labyrinthdichtung 132 auf das Niveau des Umgebungsdruckes pᵤ abbaut und Dampf über die äußere Labyrinthdichtung 134 nach außen tritt. Um dies zu verhindern, können weitere Labyrinthdichtungen mit dazwischenliegenden Wrasendampfableitungen optional nachgeschaltet werden, was in Figur 2 jedoch nicht dargestellt ist. Alternativ kann der Wrasendampfableitung 142 zur Unterstützung der Saugwirkung eine (ebenfalls nicht dargestellte) Kondensationsanlage nachgeschaltet werden. In Abhängigkeit von der anfallenden Kondensatmenge können zwischen den einzelnen Labyrinthdichtungen 130, 132, 134 Kondensatentwässerungen 144 vorgesehen werden, wobei in Figur 2 lediglich eine Kondensatentwässerung 144 zwischen der mittleren Labyrinthdichtung 132 und der äußeren Labyrinthdichtung 134 dargestellt ist.

Ein Problem der in Figur 2 dargestellten Anordnung besteht darin, dass die Verwendung des Sperrdampfes als Dichtungsfluid eine sehr aufwendige und teure Konstruktion zur Folge hat, was insbesondere auf die aufwendige Sperrdampfregelung und auf das Vorsehen der Wrasendampfableitung zurückzuführen ist.

Eine weitere Turbomaschine ist in der DE-A-36 12 327 offenbart.

Ausgehend von diesem Stand der Technik ist es somit eine Aufgabe der vorliegenden Erfindung, eine Turbomaschine, insbesondere Dampfturbine der eingangs genannten Art zu schaffen, bei der auf die Verwendung von Sperrdampf als Dichtungsfluid vollständig verzichtet werden kann, ohne dass es zu Einbußen in Bezug auf die Dichtheit der Wellendichtungsanordnung und die Betriebssicherheit kommt.

Zur Lösung dieser Aufgabe schafft die vorliegende Erfindung eine Turbomaschine, insbesondere Dampfturbine, umfassend ein Maschinengehäuse und eine durch dieses geführte und zumindest einseitig aus diesem herausgeführte Welle, wobei wenigstens ein zwischen der Welle und dem Maschinengehäuse vorhandener Ringspalt über eine Wellendichtungsanordnung abgedichtet ist, wobei die wellendichtungsanordnung wenigstens eine Radialdoppeldichtung mit zwei im Wesentlichen radial voneinander beabstandeten Dichtflächenpaaren umfasst, zwischen denen eine ringförmige Sperrfluidkammer ausgebildet ist, die über eine Sperrfluidzuleitung derart mit einem unter einem Druck stehenden gasförmigen Sperrfluid beaufschlagbar ist, dass die Radialdoppeldichtung in jedem Betriebspunkt zu beiden Seiten eine positive Druckdifferenz aufweist, wobei jedes Dichtflächenpaar eine ringförmige rotierende Dichtfläche und eine ringförmige nicht rotierende Dichtfläche aufweist, die im Wesentlichen axial gegenüberliegend angeordnet und gegeneinander vorgespannt sind, dadurch gekennzeichnet, dass auswärts in Bezug auf die Radialdoppeldichtung (44) wenigstens eine äußere Zusatzwellendichtung (46) in dem Maschinengehäuse (12) vorgesehen ist, und ein Zwischenraum zwischen der Radialdoppeldichtung (44) und der wenigstens einen äußeren Zusatzwellendichtung (46) über eine Separationsfluidzuleitung (76) mit einem Separationsfluid beaufschlagbar ist, dessen Druck (p_{SF2}) kleiner als der Druck (p_{SF1}) des Sperrf luids und größer als der Umgebungsdruck (pᵤ) ist.

Ein wesentlicher Vorteil der erfindungsgemäßen Turbomaschine besteht darin, dass auf eine Sperrdampfversorgung als Sperrdampffluid vollständig verzichtet werden kann, da gegenüber der in Figur 2 dargestellten herkömmlichen Wellendichtungsanordnung die Druckdifferenz über die Radialdoppeldichtung abgebaut wird. Entsprechend entfällt die gesamte Sperrdampfversorgung ebenso wie die Wrasendampfableitung, was zu einem preiswerten Aufbau der erfindungsgemäßen Turbomaschine führt. Darüber hinaus weist die erfindungsgemäße Turbomaschine aufgrund der nicht vorhandenen Sperrdampfversorgung einen sehr guten Wirkungsgrad auf. Die Radialdoppeldichtung erzeugt ein Druckgefälle des eintretenden Sperrfluides, das beispielsweise in Form von Luft oder Stickstoff bereitgestellt werden kann, zu beiden Seiten, weshalb der Druck im Abdampfbereich des Maschinengehäuses unterhalb des Maschinengehäuseumgebungsdruckes abgesenkt werden kann. Aufgrund des sehr kleinen Dichtspaltes, der durch die Radialdoppeldichtung definiert wird, ist die nach innen gerichtete Leckage des eingeleiteten Sperrfluides sehr gering im Vergleich zu den Luftleckagemengen, für die die in Figur 1 dargestellte Evakuierungseinrichtung 122 der Kondensationsanlage 124 mit herkömmlicher Wellendichtungsanordnung 128 ausgelegt ist. Darüber hinaus kann die Radialdoppeldichtung direkt über die Zufuhr des Sperrfluides überwacht werden.

Bevorzugt sind die nicht rotierenden Dichtflächen an einem gemeinsamen nicht rotierenden Dichtflächenträger und/oder die rotierenden Dichtflächen an einem gemeinsamen rotierenden Dichtflächenträger vorgesehen. Auf diese Weise kann die Konstruktion der erfindungsgemäßen Turbomaschine stark vereinfacht werden.

Vorteilhaft sind die nicht rotierenden Dichtflächen über eine Federkraft in Richtung der rotierenden Dichtflächen vorgespannt. Auf diese Weise ist die der Fliehkraft ausgesetzte Konstruktion des Rotors weniger kompliziert ausgebildet. Die Federkraft kann beispielsweise über ein oder mehrere Federelemente bereitgestellt werden.

Die Dichtflächenpaare sind vorteilhaft koaxial zur Welle angeordnet, wodurch sich ein einfacher und platzsparender Aufbau ergibt.

Die Beaufschlagung der Radialdoppeldichtung mit dem Sperrfluid ist derart gewählt, dass die Radialdoppeldichtung in jedem Betriebspunkt zu beiden Seiten eine positive Druckdifferenz aufweist, so dass sich stets ein stabiler Fluidfilm zwischen den gegenüberliegenden Dichtflächen der Dichtflächenpaare ergibt.

Auswärts in Bezug auf die Radialdoppeldichtung ist wenigstens eine äußere Zusatzwellendichtung und/oder einwärts in Bezug auf die Radialdoppeldichtung wenigstens eine innere Zusatzwellendichtung vorgesehen, wobei die Zusatzwellendichtungen beispielsweise in Form einer Labyrinthdichtung ausgebildet sein können. Auf diese Weise wird sichergestellt, dass bei einem Schaden der Radialdoppeldichtung der Lufteinbruch in den Kondensator begrenzt wird und somit ein Notbetrieb oder zumindest ein geregeltes Abfahren der Turbomaschine möglich ist.

Die Abschottung der Radialdoppeldichtung durch wenigstens eine äußere Zusatzwellendichtung ist besonders effektiv, da ein Zwischenraum zwischen der Radialdoppeldichtung und der wenigstens einen äußeren Zusatzwellendichtung mit einem Separationsfluid beaufschlagbar ist. Bei diesem Separationsfluid kann es sich um ein gefiltertes Umgebungsmedium handeln, wie beispielsweise Luft. Eine derartige Anordnung ist dann besonders vorteilhaft, wenn auswärtig der gesamten Wellendichtungsanordnung beispielsweise ein Öllager vorgesehen ist, aus dem austretende Ölnebel in die Wellendichtungsanordnung gelangen können, die gegebenenfalls gefährliche Fluidmischungen erzeugen.

Vorteilhaft ist ferner zumindest eine Fluidableitung vorgesehen, die bevorzugt zwischen der wenigstens einen inneren Zusatzwellendichtung und der Radialdoppeldichtung angeordnet ist.

Gemäß einer Ausführungsform der vorliegenden Erfindung handelt es sich bei der Turbomaschine um eine Dampfturbine, wobei die Wellendichtungsanordnung an einer hinteren Dichtschale des Maschinengehäuses vorgesehen ist, die bevorzugt in das Maschinengehäuse fest und abdichtend eingebaut ist oder mit dem Maschinengehäuse eine konstruktive Einheit bildet.

Alternativ oder zusätzlich kann die Wellendichtungsanordnung entsprechend der konstruktiven und thermodynamischen Erfordernisse der Turbomaschine auch an der vorderen Dichtschale 106 vorgesehen sein.

Weitere Merkmale und Vorteile der vorliegenden Erfindung werden anhand der nachfolgenden Beschreibung einer Ausführungsform einer erfindungsgemäßen Turbomaschine in Form einer Dampfturbine unter Bezugnahme auf die beiliegende Zeichnung deutlich. Darin ist
- Figur 1: eine schematische Ansicht, die den grundsätzlichen Aufbau einer Dampfturbine zeigt;
- Figur 2: eine schematische Teilansicht, die eine hintere Dichtschale des Maschinengehäuses der in Figur 1 dargestellten Dampfturbine zeigt, wobei die hintere Dichtschale mit einer herkömmlichen Wellendichtungsanordnung versehen ist;
- Figur 3: eine schematische Ansicht, welche die innerhalb der in Figur 2 dargestellten herkömmlichen Wellendichtungsanordnung vorherrschenden Drücke zeigt;
- Figur 4: eine schematische Ansicht einer Ausführungsform einer erfindungsgemäßen Turbomaschine in Form einer Dampfturbine;
- Figur 5: eine schematische Teilansicht einer hinteren Dichtschale des Maschinengehäuses der in Figur 4 dargestellten Dampfturbine, wobei die hintere Dichtschale mit einer erfindungsgemäßen Wellendichtungsanordnung versehen ist;
- Figur 6: eine schematische Ansicht, die die in der in Figur 5 dargestellten Wellendichtungsanordnung vorherrschenden Drücke zeigt; und
- Figur 7: eine Schnittansicht einer Ausführungsform einer erfindungsgemäßen Radialdoppeldichtung der in Figur 5 dargestellten Wellendichtungsanordnung.

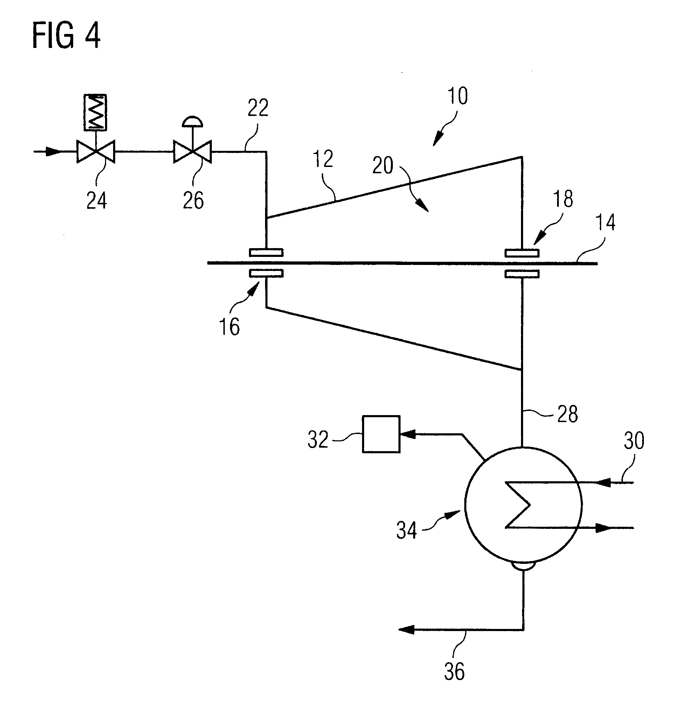

Figur 4 zeigt eine erfindungsgemäße Turbomaschine in Form einer Dampfturbine 10. Die Dampfturbine 10 umfasst ein Maschinengehäuse 12, durch das sich eine Welle 14 erstreckt, die beidseitig aus dem Maschinengehäuse 12 herausgeführt ist. Das Maschinengehäuse 12 ist mit einer vorderen Dichtschale 16 und mit einer hinteren Dichtschale 18 versehen, wobei diese die Aufgaben übernehmen, den innerhalb des Maschinengehäuses 12 definierten Druckraum 20 zur Maschinengehäuseumgebung abzudichten. Dem Druckraum 20 der Dampfturbine 10 wird über eine Zuleitung 22, die in Durchströmungsrichtung aufeinanderfolgend mit einem Schnellschlussventil 24 und einem Regelventil 26 versehen ist, Frischdampf zugeführt. Nach der Entspannung des Dampfes in der Dampfturbine 10 wird der Abdampf über eine Ableitung 28 einer mit einer Kühleinrichtung 30 versehenen und mit einer Evakuierungseinrichtung 32 wirkverbundenen Kondensationsanlage 34 zugeführt und dort kondensiert. Das entstehende Kondensat wird über eine Leitung 36 aus der Kondensationsanlage 34 geleitet.

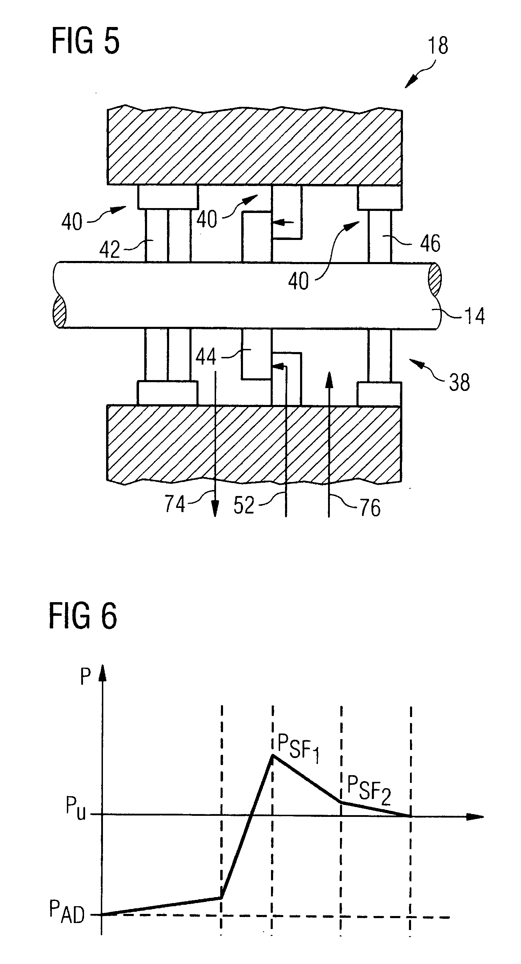

Zur Abdichtung des zwischen der Welle 14 und der Dichtschale 16 bzw. 18 vorhandenen Ringspaltes 38 ist die Dichtschale 16 bzw. 18, die in das Maschinengehäuse 12 fest und abdichtend eingebaut ist oder mit dem Maschinengehäuse 12 eine konstruktive Einheit bildet, mit einer Wellendichtungsanordnung 40 versehen, wie es insbesondere in Figur 5 dargestellt ist. Die Wellendichtungsanordnung 40 umfasst ausgehend vom Druckraum 20 drei aufeinanderfolgende Dichtungsmodule, und zwar eine innere Labyrinthdichtung 42, eine Radialdoppeldichtung 44 und eine äußere Labyrinthdichtung 46, die den Ringspalt 38 gemeinsam abdichten.

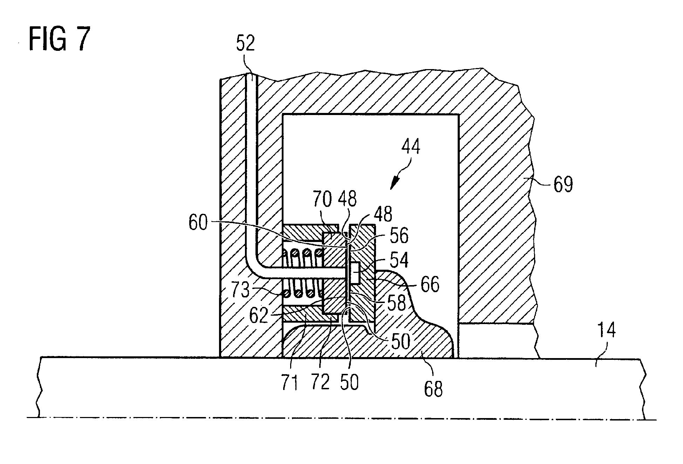

Die Radialdoppeldichtung 44, die genauer in Figur 7 dargestellt ist, umfasst zwei im Wesentlichen radial voneinander beanstandete Dichtflächenpaare 48 und 50 zwischen denen eine ringförmige, über einer Sperrfluidzuleitung 52 beaufschlagbare Sperrfluidkammer 54 ausgebildet ist. Jedes Dichtflächenpaar 48, 50 weist eine ringförmige rotierende Dichtfläche 56, 58 und eine ringförmige nicht rotierende Dichtfläche 60, 62 auf, die im Wesentlichen axial gegenüberliegend angeordnet sind. Die rotierenden Dichtflächen 56, 58 sind an einem rotierenden Dichtflächenträger 66 vorgesehen, der über ein Nabenelement 68 fest mit der Welle 14 verbunden ist. Die nicht rotierenden Dichtflächen 60 und 62 sind an einem nicht rotierenden Dichtflächenträger 70 vorgesehen, der an einem hohlzylindrischen Halteelement 71 gehalten ist, das fest mit einem Dichtungsgehäuse 69 verbunden ist, welches wiederum fest mit der Dichtschale 16 bzw. 18 verbunden ist oder mit der Dichtschale eine konstruktive Einheit bildet. Das Halteelement 71 weist an seinen zu den rotierenden Dichtflächen 56 und 58 weisenden Enden eine ringförmige Aufnahme 72 auf, in die der nicht rotierende Dichtflächenträger 70 axial verschiebbar eingesetzt ist. Im Innenraum des Halteelements 71 ist ein Federelement 73 positioniert, das den nicht rotierenden Dichtflächenträger 70 gegen den rotierenden Dichtflächenträger 66 vorspannt, so dass die nicht rotierenden Dichtflächen 60 und 62 koaxial zur Welle 14 gegen die entsprechenden rotierenden Dichtflächen 56 und 58 gedrückt werden.

Die Wellendichtungsanordnung 40 umfasst ferner eine Kondensatableitung 74, die Kondensat aus dem zwischen der inneren Labyrinthdichtung 42 und der Radialdoppeldichtung 44 vorhandenen Ringraum abführt und eine Separationsfluidzuleitung 76, die in dem zwischen der Radialdoppeldichtung 44 und der äußeren Labyrinthdichtung 46 vorhandenen Ringraum mündet, um diesem ein Separationsfluid zuzuführen.

Während des Betriebs steht das Prozessfluid im Abdampfbereich 78 des Druckraums 20 unter einem Abdampfdruck p_{AD}, der unterhalb dem Maschinengehäuseumgebungsdruck pᵤ liegt. Zwischen der inneren Labyrinthdichtung 42 und der Radialdoppeldichtung 44 wird anfallendes Kondensat über die Kondensatableitung 74 abgeführt. Soll der Abdampf genügend überhitzt sein, so kann gegebenenfalls auf die innere Labyrinthdichtung 42 verzichtet werden. In die Radialdoppeldichtung 44 wird über die Sperrfluidzuleitung 52 ein Sperrfluid beispielsweise in Form von Luft oder Stickstoff mit einem Überdruck p_{SF1} zugeführt, so dass sich eine Abströmung durch die beiden Dichtflächenpaare 48 und 50 der Radialdoppeldichtung 44 sowohl innenwärtig als auch auswärtig ergibt. zwischen der Radialdoppeldichtung 44 und der äußeren Labyrinthdichtung 46 wird ein Separationsfluid mit dem Druck p_{SF2} über die Separationsfluidzuleitung 76 zugeleitet, das in Richtung der Maschinengehäuseumgebung entweicht und etwaige Verschmutzungen von außen an dem Eintritt in die Wellendichtungsanordnung 40 hindert. Bei dem Separationsfluid kann es sich beispielsweise um das gereinigte Medium der Umgebung oder ein inertes Fluid handeln, wie beispielsweise um Stickstoff oder dergleichen.

Wie es anhand Figur 6 schematisch dargestellt ist, gewährleistet die Wellendichtungsanordnung 40, dass der Druck p_{SF1} des verwendeten Sperrfluides über den anderen Drücken liegt und entsprechend in einem Betriebszustand stets eine sichere Dichtwirkung sichergestellt ist.

## Patentansprüche

1. Turbomaschine (10),
insbesondere Dampfturbine,
umfassend ein Maschinengehäuse (12) und eine durch dieses geführte und zumindest einseitig aus diesem herausgeführte Welle (14),
wobei wenigstens ein zwischen der Welle (14) und dem Maschinengehäuse (12) vorhandener Ringspalt über eine Wellendichtungsanordnung (40) abgedichtet ist,
wobei die Wellendichtungsanordnung (40) wenigstens eine Radialdoppeldichtung (44) mit zwei im Wesentlichen radial voneinander beabstandeten Dichtflächenpaaren (48, 50) umfasst, zwischen denen eine ringförmige Sperrfluidkammer (54) ausgebildet ist, die über eine Sperrfluidzuleitung (52) derart mit einem unter einem Druck (p_{SF1}) stehenden gasförmigen Sperrfluid beaufschlagbar ist, dass die Radialdoppeldichtung (44) in jedem Betriebspunkt zu beiden Seiten eine positive Druckdifferenz aufweist,
wobei jedes Dichtflächenpaar (48, 50) eine ringförmige rotierende Dichtfläche (56, 58) und eine ringförmige nicht rotierende Dichtfläche (60, 62) aufweist, die im Wesentlichen axial gegenüberliegend angeordnet und gegeneinander vorgespannt sind,
**dadurch gekennzeichnet, dass**
auswärts in Bezug auf die Radialdoppeldichtung (44) wenigstens eine äußere Zusatzwellendichtung (46) in dem Maschinengehäuse (12) vorgesehen ist, und ein Zwischenraum zwischen der Radialdoppeldichtung (44) und der wenigstens einen äußeren Zusatzwellendichtung (46) über eine Separationsfluidzuleitung (76) mit einem Separationsfluid beaufschlagbar ist, dessen Druck (p_{SF2}) kleiner als der Druck (p_{SF1}) des Sperrfluids und größer als der Umgebungsdruck (pᵤ) ist.

2. Turbomaschine (10) nach Anspruch 1,
**dadurch gekennzeichnet, dass**
die nicht rotierenden Dichtflächen (60, 62) an einem gemeinsamen nicht rotierenden Dichtflächenträger (70) und/oder dass die rotierenden Dichtflächen (56, 58) an einem gemeinsamen rotierenden Dichtflächenträger (66) vorgesehen sind.

3. Turbomaschine (10) nach einem der vorhergehenden Ansprüche,
**dadurch gekennzeichnet, dass**
die nicht rotierenden Dichtflächen (60, 62) über eine Federkraft in Richtung der rotierenden Dichtflächen (56, 58) vorgespannt sind.

4. Turbomaschine (10) nach einem der vorhergehenden Ansprüche,
**dadurch gekennzeichnet, dass**
die Dichtflächenpaare (48, 50) koaxial zur Welle (14) angeordnet sind.

5. Turbomaschine (10) nach einem der vorhergehenden Ansprüche,
**dadurch gekennzeichnet, dass**
einwärts in Bezug auf die Radialdoppeldichtung (44) wenigstens eine innere Zusatzwellendichtung (42) vorgesehen ist.

6. Turbomaschine (10) nach einem der vorhergehenden Ansprüche,
**dadurch gekennzeichnet, dass**
zumindest eine Fluidableitung (74) vorgesehen ist, bevorzugt zwischen der wenigstens einen inneren Zusatzwellendichtung (42) und der Radialdoppeldichtung (44).

7. Turbomaschine (10) nach einem der vorhergehenden Ansprüche in Form einer Dampfturbine,
wobei die Wellendichtungsanordnung (40) an einer hinteren Dichtschale (18) des Maschinengehäuses (12) vorgesehen ist.

8. Turbomaschine (10) nach einem der vorhergehenden Ansprüche in Form einer Dampfturbine,
wobei die Wellendichtungsanordnung (40) an einer vorderen Dichtschale (16) des Maschinengehäuses (12) vorgesehen ist.

## Claims

1. Turbomachine (10),
especially a steam turbine,
comprising a machine housing (12) and a shaft (14) which is guided through this and is guided out of this at least on one side,
wherein at least one annular gap, which exists between the shaft (14) and the machine housing (12), is sealed via a shaft seal arrangement (40),
wherein the shaft seal arrangement (40) comprises at least one radial double seal (44) with two essentially radially spaced apart sealing-surface pairs (48, 50), between which is formed an annular seal-fluid chamber (54) which, via a seal-fluid feed line (52), can be pressurized with a gaseous seal fluid under pressure (p_{SF1}) in such a way that the radial double seal (44) has a positive pressure difference on both sides at any operating point,
wherein each sealing-surface pair (48, 50) has an annular rotating sealing surface (56, 58) and an annular non-rotating sealing surface (60, 62), which are arranged essentially axially opposite each other and are pretensioned against each other,
**characterized in that**
towards the outside, in relation to the radial double seal (44), provision is made for at least one outer additional shaft seal (46) in the machine housing (12), and an interspace between the radial double seal (44) and the at least one outer additional shaft seal (46) can be pressurized with a separation fluid via a separation-fluid feed line (76), the pressure (p_{SF2}) of which is lower than the pressure (p_{SF1}) of the seal fluid and higher than the ambient pressure (pᵤ).

2. Turbomachine (10) according to claim 1,
**characterized in that**
the non-rotating sealing surfaces (60, 62) are provided on a common non-rotating sealing-surface carrier (70) and/or **in that** the rotating sealing surfaces (56, 58) are provided on a common rotating sealing-surface carrier (66).

3. Turbomachine (10) according to one of the preceding claims,
**characterized in that**
the non-rotating sealing surfaces (60, 62) are pretensioned via a spring force in the direction of the rotating sealing surfaces (56, 58).

4. Turbomachine (10) according to one of the preceding claims,
**characterized in that**
the sealing-surface pairs (48, 50) are arranged coaxially to the shaft (14).

5. Turbomachine (10) according to one of the preceding claims,
**characterized in that**
towards the inside, in relation to the radial double seal (44), provision is made for at least one inner additional shaft seal (42).

6. Turbomachine (10) according to one of the preceding claims,
**characterized in that**
provision is made for at least one fluid drain line (74), preferably between the at least one inner additional shaft seal (42) and the radial double seal (44).

7. Turbomachine (10) according to one of the preceding claims in the form of a steam turbine,
wherein the shaft seal arrangement (40) is provided on a rear seal shell (18) of the machine housing (12).

8. Turbomachine (10) according to one of the preceding claims in the form of a steam turbine,
wherein the shaft seal arrangement (40) is provided on a front seal shell (16) of the machine housing (12).

## Revendications

1. Turbomachine (10),
notamment turbine à vapeur,
comprenant un carter (12) de machine et un arbre (14) qui y passe et qui en sort au moins d'un côté,
dans laquelle au moins un interstice annulaire, présent entre l'arbre (14) et le carter (12) de la machine, est rendu étanche par un dispositif (40) d'étanchéité d'arbre,
dans laquelle le dispositif (40) d'étanchéité d'arbre comprend au moins une étanchéité (44) double radiale, ayant deux paires (48, 50) de surfaces d'étanchéité à distance l'une de l'autre sensiblement radialement et entre lesquelles est formée une chambre (54) annulaire pour du fluide d'arrêt, qui peut être alimentée en fluide d'arrêt gazeux sous une pression (P_{sF1}) par un conduit (52) pour du fluide d'arrêt de manière à ce que l'étanchéité (44) double radiale ait, en chaque point de fonctionnement, une différence de pression positive des deux côtés,
dans laquelle chaque paire (48, 50) de surfaces d'étanchéité a une surface (56, 58) d'étanchéité annulaire tournante et une surface (60, 62) d'étanchéité annulaire qui ne tourne pas, qui sont disposées en étant sensiblement en opposition axialement et qui sont précontraintes l'une contre l'autre,
**caractérisée en ce que**
il est prévu, à l'extérieur, par rapport à l'étanchéité (44) double radiale, au moins une étanchéité (46) d'arbre supplémentaire extérieure dans le carter (12) de la machine et un espace intermédiaire entre l'étanchéité (44) double radiale et la au moins une étanchéité (46) d'arbre supplémentaire extérieure peut être alimentée en un fluide de séparation par un conduit (76) pour un fluide de séparation, dont la pression (P_{SF2}) est plus petite que la pression (P_{SF1}) du fluide d'arrêt et plus grande que la pression (Pᵤ) ambiante.

2. Turbomachine (10) suivant la revendication 1,
**caractérisée en ce que**
les surfaces (60, 62) d'étanchéité qui ne tournent pas sont prévues sur un support (70) commun de surfaces d'étanchéité qui ne tournent pas et/ou les surfaces (56, 58) d'étanchéité qui tournent sont prévues sur un support (66) commun de surfaces d'étanchéité qui tournent.

3. Turbomachine (10) suivant l'une des revendications précédentes,
**caractérisée en ce que**
les surfaces (60, 62) qui ne tournent pas sont précontraintes par une force de ressort en direction des surfaces (56, 58) d'étanchéité qui tournent.

4. Turbomachine (10) suivant l'une des revendications précédentes,
**caractérisée en ce que**
les paires (48, 50) de surfaces d'étanchéité sont disposées coaxialement à l'arbre (14).

5. Turbomachine (10) suivant l'une des revendications précédentes,
**caractérisée en ce que**
au moins une étanchéité (42) d'arbre supplémentaire intérieure est prévue vers l'intérieur par rapport à l'étanchéité (44) double radiale.

6. Turbomachine (10) suivant l'une des revendications précédentes,
**caractérisée en ce que**
il est prévu au moins un conduit (74) d'évacuation de fluide, de préférence entre la au moins une étanchéité (42) d'arbre supplémentaire intérieure et l'étanchéité (44) double radiale.

7. Turbomachine (10) suivant l'une des revendications précédentes sous la forme d'une turbine à vapeur,
dans laquelle l'agencement (40) d'étanchéité d'arbre est prévu sur une coque (18) d'étanchéité arrière du carter (12) de la machine.

8. Turbomachine (10) suivant l'une des revendications précédentes, sous la forme d'une turbine à vapeur,
dans laquelle l'agencement (40) d'étanchéité d'arbre est prévue sur une coque (16) d'étanchéité avant du carter (12) de la machine.
